# FASCICULE DE BREVET EUROPEEN

(11) **EP 2 105 249 B1**
(45) Date de publication et mention de la délivrance du brevet: **27.04.2011**
(21) Numéro de dépôt: 09155921.1
(22) Date de dépôt: 23.03.2009
(51) Int. Cl.: B23Q 5/32, B23Q 5/40

(54) **Machine d'usinage à avance mécanique et procédé d'usinage**
Bearbeitungsmaschine mit mechanischem Vorschub und Bearbeitungsverfahren
Machining tool with automatic feed and machining method

(30) Priorité: 27.03.2008 FR 0851982
(43) Date de publication de la demande: 30.09.2009
(73) Titulaire: Cooper Power Tools SAS, 77330 Ozoir la Ferrière (FR)
(72) Inventeur: Maillard, Sylvain, 77370 Nangis (FR); Da Palma, Edouard, 92100 Boulogne Billancourt (FR)
(74) Mandataire: Blot, Philippe Robert Emile

(56) Documents cités:
- EP-A- 1 618 978
- US-A1- 2006 065 418

## Description

La présente invention concerne une machine d'usinage selon le préambule de la revendication 1.

L'invention s'applique par exemple aux machines pneumatiques de perçage utilisées dans la construction aéronautique.

Une machine du type précité est connue par exemple de EP-A-1 618 978. Le mécanisme d'entraînement d'une telle machine est dit « à avance mécanique » en français ou « positive feed drill » en anglais.

Un moteur unique assure alors, via le mécanisme d'entraînement, l'entraînement de la broche en rotation autour de son axe et simultanément son avance ou son recul par translation le long de son axe.

Les entraînements en translation et en rotation de la broche étant mécaniquement liés, l'avance de la broche par tour est constante. Ainsi, les variations de la vitesse du moteur n'ont aucune incidence sur l'avance par tour. L'épaisseur des copeaux formés reste donc constante et favorise la qualité de surface et la précision des alésages percés par une telle machine.

Le perçage de certains matériaux réputés difficiles, notamment de matériaux composites, nécessite parfois des vitesses de rotation d'outil importantes.

Néanmoins, une telle machine ne peut être utilisée à haute vitesse, c'est-à-dire par exemple à 15 000 tr/min, sans connaître une usure prématurée du mécanisme d'entraînement, voire une casse.

Un but de l'invention est de fournir une machine du type précité, qui fonctionne à haute vitesse de rotation et qui soit fiable.

A cet effet, l'invention a pour objet une machine selon la revendication 1.

Selon des modes particuliers de réalisation, la machine peut comprendre l'une ou plusieurs des caractéristiques des revendications dépendantes 2 à 13, prise(s) isolément ou suivant toutes les combinaisons techniquement possibles.

L'invention a également pour objet un procédé d'usinage selon les revendications 14 ou 15.

L'invention sera mieux comprise à la lecture de la description qui va suivre, donnée uniquement à titre d'exemple, et faite en se référant aux dessins annexés, sur lesquels :
- la figure 1 est une vue schématique en coupe latérale d'une machine selon l'invention ;
- la figure 2 est une vue schématique agrandie en coupe suivant la ligne Il de la figure 1, illustrant l'embrayage du mécanisme d'entraînement de la broche de la machine de la figure 1 ;
- la figure 3 est une vue analogue à la figure 2 dans une autre configuration de l'embrayage ;
- la figure 4 est une vue schématique illustrant une partie du circuit pneumatique de commande de la machine de la figure 1 ; et
- les figures 5, 6 et 7 sont des vues analogues à la figure 4 illustrant des étapes ultérieures de commande de la machine de la figure 1.

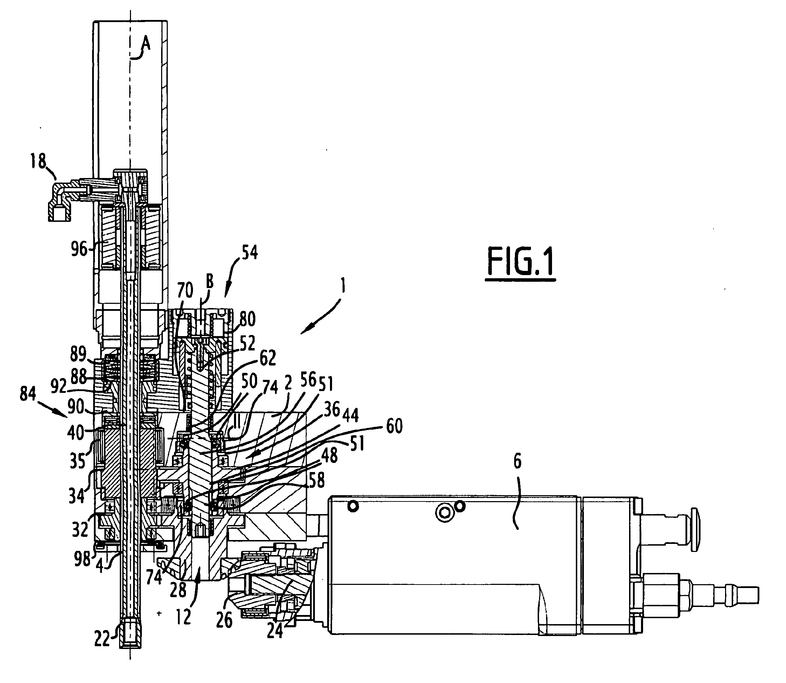

Dans tout ce qui suit, les termes « droit », « gauche », « vertical », « horizontal », « inférieur », « supérieur », « haut » et « bas » s'entendent par rapport à la position de la machine sur la figure 1.

La figure 1 illustre schématiquement une machine de perçage 1 portative qui comprend principalement :
- un carter 2 ;
- une broche 4 porte-outil s'étendant suivant un axe vertical A ;
- un moteur d'entraînement 6, pneumatique dans l'exemple illustré ; et
- un mécanisme 12 d'entraînement de la broche 4 reliant mécaniquement la broche 4 au moteur 6.

La broche 4 est reçue dans le carter 2 de manière mobile en rotation autour de son axe A et en translation le long de cet axe A. Le carter 2 est muni d'un système de lubrification 18.

Afin de pouvoir assurer le perçage d'alésages, un outil de perçage sous forme d'un forêt est par exemple monté de manière amovible à l'extrémité inférieure 22 de la broche 4. Le système de lubrification 18 permet de lubrifier l'arête de l'outil pendant l'usinage.

L'arbre de sortie 24 du moteur 6 porte un pignon conique 26 de sortie qui engrène avec un pignon conique d'entrée 28 d'axe B, appartenant au mécanisme d'entraînement 12. Dans l'exemple représenté, le moteur 6 est disposé sensiblement à angle droit par rapport à la broche 4. Toutefois, il pourrait être sensiblement parallèle à cette dernière, comme exposé par exemple dans le document FR-2 829 952.

Comme illustré par la figure 1, le mécanisme d'entraînement 12 comprend, outre le pignon conique d'entrée 28, les éléments suivants pour qu'il constitue un mécanisme dit « à avance mécanique » en français ou « positive feed drill » en anglais :
- un premier pignon 32 engrenant avec le pignon d'entrée 28 ;
- un deuxième pignon 34 qui surmonte le premier pignon 32 ; et
- un embrayage 36 apte à accoupler le deuxième pignon 34 sélectivement au pignon d'entrée 28 et au carter 2.

Le premier pignon 32 est enfilé sur la broche 4 et est solidaire en rotation de cette dernière. La broche 4 est mobile en translation par rapport au pignon 32 le long de l'axe A. Cette liaison entre la broche 4 et le premier pignon 32 est par exemple obtenue grâce à des cannelures.

Le deuxième pignon 34 comporte un filetage interne coopérant avec un filetage externe de la broche 4. Le deuxième pignon 34 est ainsi vissé, de manière connue, sur la broche 4. Le deuxième pignon 34 est guidé en rotation autour de son axe A par une cage à aiguilles 35 reçue dans le carter 2.

Du fait de la liaison hélicoïdale entre la broche 4 et le deuxième pignon 34, le pignon 34 entraîne la broche 4 en translation le long de l'axe A en fonction de la vitesse relative de rotation entre le deuxième pignon 34 et la broche 4, c'est-à-dire en fonction de la vitesse relative de rotation entre le deuxième pignon 34 et le premier pignon 32.

Dans le cas où l'entraînement en rotation de la broche 34 est effectué dans le sens horaire, le pas de la liaison hélicoïdale entre la broche 4 et le deuxième pignon 34 est, dans l'exemple illustré, à gauche. De cette manière, le mouvement d'avance de la broche 4, c'est-à-dire son déplacement en translation vers le bas le long de l'axe A (figure 1), est assuré lorsque la vitesse de rotation du deuxième pignon 34 est supérieure à la vitesse de rotation du premier pignon 32.

Inversement, le mouvement de recul de la broche 4, c'est-à-dire son déplacement en rotation vers le haut le long de l'axe A (figure 1), est obtenu lorsque la vitesse de rotation du deuxième pignon 34 est inférieure à la vitesse de rotation du premier pignon 32.

L'embrayage 36 comprend :
- un pignon rotatif d'embrayage 44 engrené avec le deuxième pignon 34 ;
- une pluralité de premières clavettes 48, montées sur le pourtour du pignon rotatif d'embrayage 44, et mobiles par rapport au pignon 44 entre une position d'accouplement du pignon 44 avec le pignon d'entrée 28, et une position de libération du pignon 44; et
- une pluralité de deuxièmes clavettes 50, montées sur le pourtour du pignon rotatif d'embrayage 44, et mobiles par rapport au pignon 44 entre une position d'accouplement du pignon 44 avec le carter 2, et une position de libération du pignon 44.

Le pignon rotatif d'embrayage 44 est d'axe B et rotatif pur autour de l'axe B par rapport au carter 2. Le pignon 44 est fixe en translation par rapport au carter 2. A cet effet, le pignon 44 est bloqué en translation par rapport au carter 2 et guidé en rotation pure autour de son axe B par deux roulements 51.

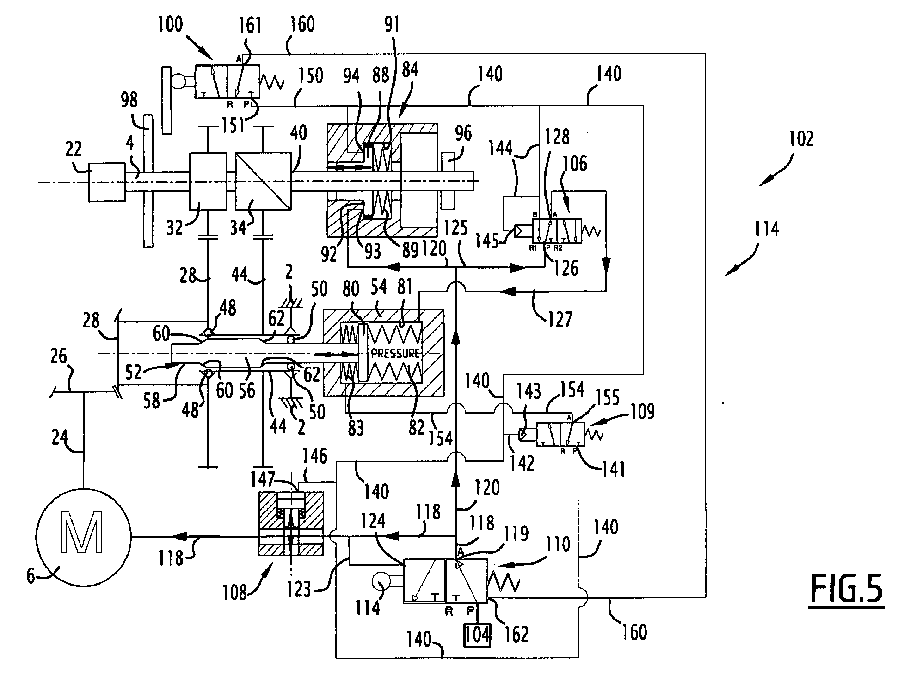

Dans la position d'accouplement des premières clavettes 48 (figure 5), l'embrayage 36 est dans une configuration d'avance de la broche 4, les deuxièmes clavettes 50 étant en position de libération. Le deuxième pignon 34 est alors entraîné à une vitesse de rotation supérieure à celle du premier pignon 32. En effet, les diamètres primitifs des pignons 28, 32, 34 et 44 sont prévus de telle sorte que dans la configuration d'avance de l'embrayage 36, le deuxième pignon 34 tourne à une vitesse supérieure à celle du premier pignon 32.

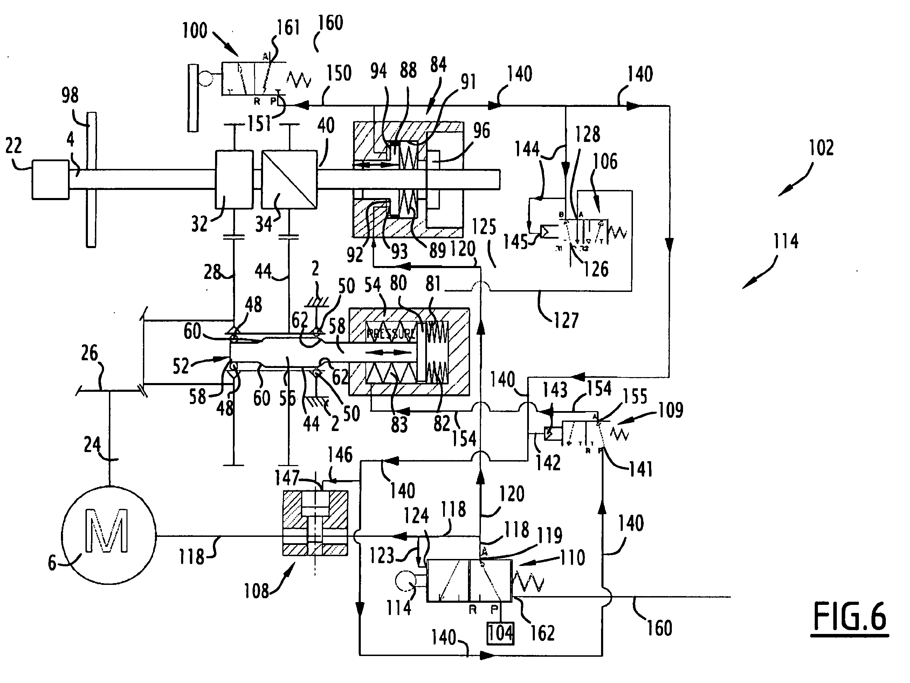

Dans la position d'accouplement des deuxièmes clavettes 50 (figures 1 et 6), l'embrayage 36 est dans une configuration de recul de la broche 4, les premières clavettes 48 étant en position de libération. Le deuxième pignon 34 a alors une vitesse de rotation inférieure à la vitesse de rotation du premier pignon 32. Dans l'exemple illustré, le deuxième pignon 34 est fixe en rotation par rapport au carter 2 dans la configuration de recul de la broche 4.

La configuration d'avance de l'embrayage 36 correspond donc à une configuration dans laquelle le deuxième pignon 32 est lié en rotation à l'arbre de sortie 24 du moteur 6, tandis que la configuration de recul de la broche 4 correspond à une configuration dans laquelle le deuxième pignon 34 est immobilisé en rotation par rapport au carter 2.

Pour déplacer les clavettes 48 et 50, l'embrayage 36 comprend un poussoir 52 mobile entre une position d'avance dans laquelle le poussoir 52 maintient les premières clavettes 48 dans leur position d'accouplement et libère les deuxièmes clavettes 50, et une position de recul dans laquelle le poussoir 52 maintient les deuxièmes clavettes 50 dans leur position d'accouplement et libère les premières clavettes 48.

Le poussoir 52 est reçu en translation à l'intérieur du pignon rotatif 44 le long de l'axe B, entre sa position d'avance et sa position de recul, et commandé par un vérin de déplacement 54.

Le poussoir 52 est une tige comportant une portion élargie 56, et deux portions étroites 58 de part et d'autre de la portion élargie 56 suivant l'axe B. Le poussoir 52 forme ainsi, au niveau des jonctions entre la portion élargie 56 et les portions étroites 58 deux surfaces de came 60 et 62 (voir figures 1 et 4 à 7) de déplacement respectivement des premières clavettes 48 et des deuxièmes clavettes 50.

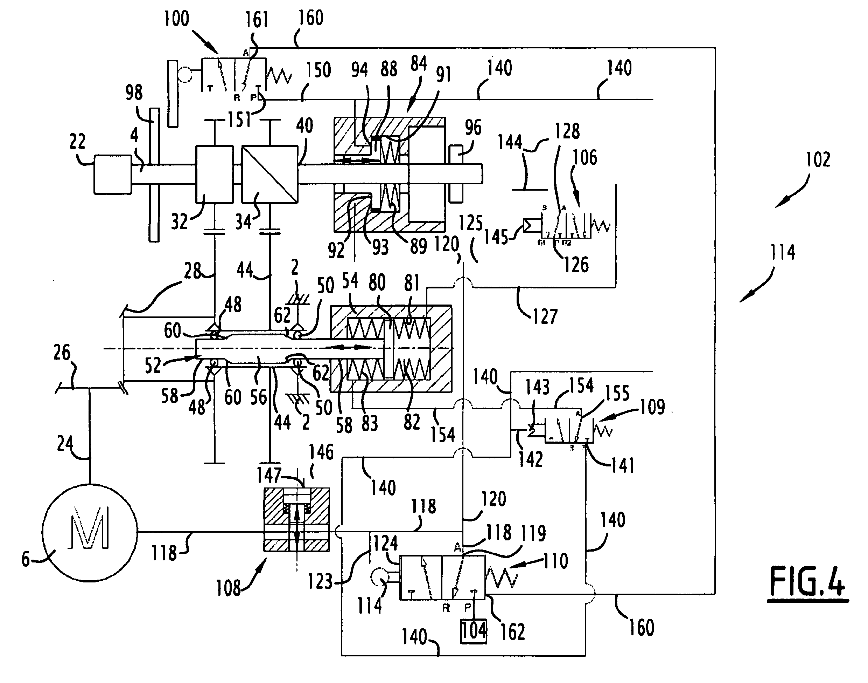

Lors du déplacement du poussoir 52 jusqu'à sa position d'avance, la surface de came 60 déplace les premières clavettes 48 de leur position de libération (figure 4) vers et jusqu'à leur position d'accouplement (figure 5).

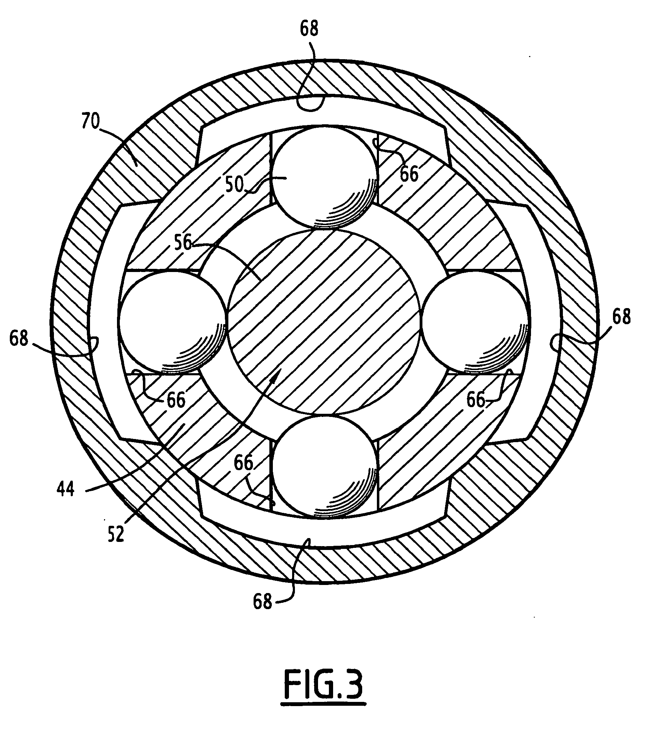

Lors du déplacement du poussoir 52 jusqu'à sa position de recul (illustrée sur la figure 1), la surface de came 62 déplace les deuxièmes clavettes 50 de leur position de libération (figures 3 à 5 et 7) vers et jusqu'à leur position d'accouplement (figures 1, 2 et 6).

La surface de la portion élargie 56 maintient sélectivement les clavettes 48 et 50 dans leur position d'accouplement.

Les clavettes 48 et 50 sont, dans l'exemple illustré, des billes disposées circonférentiellement autour du poussoir 52, en deux rangées respectives espacées le long de l'axe B.

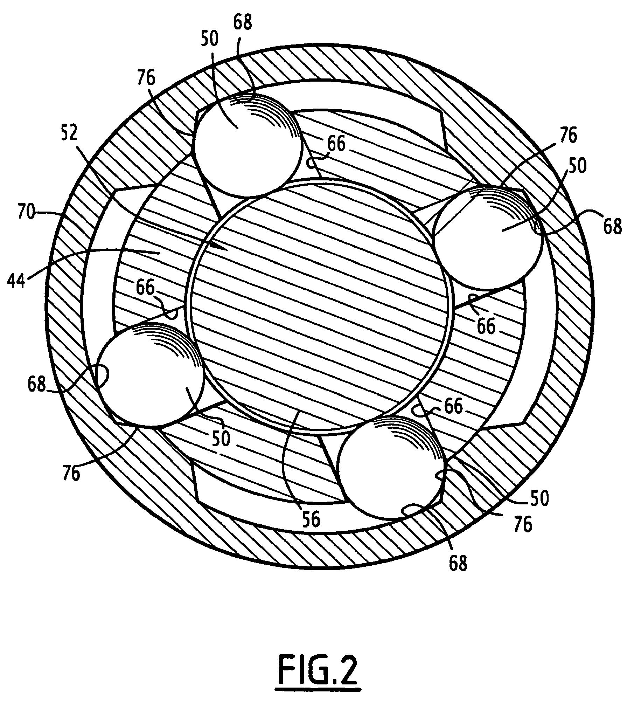

Chaque clavette 48, 50 est reçue dans un alésage radial respectif 66 (figures 2 et 3) du pignon rotatif 44, de telle sorte que chaque clavette 48, 50 est mobile radialement par rapport à l'axe B du pignon rotatif 44 entre sa position d'accouplement et sa position de libération, et solidaire en rotation du pignon 44 autour de son axe B.

Les clavettes 48 et 50 sont, dans l'exemple illlustré, espacées angulairement entre elles d'environ 90°.

Chaque deuxième clavette 50 coopère, dans sa position d'accouplement, avec un évidement de blocage 68 (figures 2 et 3) prévu dans une bague d'accouplement de recul 70, d'axe B, fixée sur le carter 2.

De la même façon, chaque première clavette 48 coopère, dans sa position d'accouplement, avec un évidement de blocage en rotation 68 prévu dans une bague d'accouplement d'avance 74 (figure 1), d'axe B, fixée sur le pignon d'entrée 28. Les évidements 68 sont ménagés radialement dans des bagues 70 et 74, et présentent des surfaces de blocage 76 de la rotation des clavettes 48 et 50 autour de l'axe B. Les surfaces de blocage 76 forment également des surfaces de came aptes à déplacer les clavettes 48 et 50 respectives de leur position d'accouplement vers et jusqu'à leur position de libération, lorsqu'elles sont respectivement libérées par le poussoir 52.

Dans l'exemple illustré, le vérin de déplacement 54 (figures 1 et 4 à 7) du poussoir 52 est un vérin pneumatique à double effet comprenant un piston 80 mobile dans un cylindre 81. Le piston 80 et le cylindre 81 délimitent ensemble, de part et d'autre du piston 80, une chambre d'avance 82 et une chambre de recul 83. L'augmentation de volume de la chambre d'avance 82 correspond au déplacement du poussoir 52 vers sa position d'avance tandis que l'augmentation de volume de la chambre de recul 83 correspond au déplacement du poussoir 52 vers sa position de recul.

Le piston 80 est sollicité élastiquement vers une position intermédiaire dans laquelle le poussoir 52 est entre sa position d'avance et sa position de recul. Dans cette position intermédiaire, les premières clavettes 48 et les deuxièmes clavettes 50 sont libérées.

Le mécanisme d'entraînement 12 comprend en outre un mécanisme d'appui axial 84 (figure 1) sur le deuxième pignon d'entraînement 34. Ce mécanisme 84 comprend un piston 88 surmontant le deuxième pignon 34 et deux bagues élastiques d'appui axial 89 poussant le piston 88 vers le deuxième pignon 34. Les bagues 89 sont coincées entre le carter 2 et le piston 88. Les bagues 89 sont symbolisées par un ressort sur les figures 4 à 7. Le piston 88 est fixe en rotation et le mécanisme d'appui 84 comprend un roulement 90 autorisant la rotation relative du pignon 34 et du piston 88.

Le piston 88 est mobile en translation dans un cylindre 91 (figures 4 à 7) et délimite avec le cylindre 91 et avec la broche 4, une chambre de détection de fin de course d'avance 92 communiquant avec des orifices d'entrée 93 et de sortie 94. Le piston 88 est mobile entre une position normale de fonctionnement dans laquelle les orifices d'entrée 93 et de sortie 94 de la chambre 92 sont obturés par le piston 88 et une position de détection de fin de course d'avance de la broche 4 dans laquelle les orifices 93 et 94 sont libres.

Afin de limiter la course du mouvement de la broche 4 le long de l'axe A, la broche 4 comporte une butée de fin de course d'avance 96 et une butée de fin de course de recul 98.

La butée de fin de course d'avance 96 guide la broche 4 en rotation autour de l'axe A et en translation le long de l'axe A. La butée 96 est fixe en translation le long de l'axe A par rapport à la broche 4.

Lors de la fin de course d'avance de la broche 4, la butée 96 bloque la translation de la broche 4 le long de son axe A. Le deuxième pignon 34 se visse alors vers le haut (figure 1) et lève le piston d'appui 88, de telle sorte que le piston 88 est dans sa position de détection et la fin de la course d'avance de la broche 4 est détectée. Le piston 88 forme ainsi une unité de détection de fin de course d'avance.

Lorsque la broche 4 arrive en fin de course de recul, la butée 98 vient en appui contre une vanne pneumatique de détection de fin de course de recul 100.

Comme illustré sur les figures 4 à 7, la machine 1 comprend en outre un dispositif de commande pneumatique 102 comprenant :
- une source d'air sous pression 104 ;
- le vérin de déplacement 54 du poussoir 52 ;
- le piston 88 détectant la fin de course d'avance de la broche 4 ;
- la vanne de détection de fin de course de recul 100, commandée par contact avec la butée 98 ;
- une vanne de commande d'avance 106 pour amener le vérin 54 dans sa configuration d'avance ;
- une vanne 108 de réduction du débit d'alimentation du moteur 6 ;
- une vanne de commande de recul 109 pour amener le vérin 54 dans sa configuration de recul ; et
- une vanne d'alimentation 110 assurant l'alimentation de l'ensemble du dispositif de commande 102, commandée dans l'exemple illustré en ouverture par un bouton de mise en marche 114 et en fermeture par la vanne de détection de fin de course de recul 100, et apte à détecter une baisse de pression pour arrêter la machine 1.

La vanne de détection de fin de course de recul 100 est par exemple un distributeur 3 voies, 2 positions. Une position est une position normale de fonctionnement, dans laquelle la vanne 100 est fermée et vers laquelle la vanne 100 est rappelée élastiquement, et l'autre position est une postion de commande de fermeture de la vanne d'alimentation 110 vers laquelle la vanne 100 est amenée par la butée de fin de course de recul 98.

La vanne de commande d'avance 106 est par exemple un distributeur 5 voies, 2 positions. Les deux positions sont une position de commande d'avance, dans laquelle la vanne 106 alimente la chambre d'avance 82, et une position inactive dans laquelle la vanne 106 est fermée. La vanne 106 est rappelée élastiquement vers sa position de commande d'avance. La vanne 106 est commandée pneumatiquement vers sa position inactive par le déplacement du piston 88 dans sa position de détection de fin de course d'avance.

La vanne de réduction du débit d'alimentation 108 du moteur 6 est par exemple une vanne 3 voies, 2 positions. Une position est une position ouverte d'alimentation du moteur 6 et l'autre position est une position de réduction du débit d'alimentation. La vanne 108 est rappelée élastiquement vers sa position ouverte, et commandée pneumatiquement vers sa position de réduction de débit par le déplacement du piston 88 dans sa position de détection de fin de course d'avance.

La vanne de commande de recul 109 est un distributeur 3 voies, 2 positions, dont une position est une position de commande de recul, dans laquelle la vanne 109 alimente la chambre de recul 83, et l'autre position est une position inactive dans laquelle la vanne 109 est fermée. La vanne 109 est rappelée élastiquement vers sa position inactive. La vanne 109 est commandée pneumatiquement vers sa position de commande de recul par le déplacement du piston 88 dans sa position de détection de fin de course d'avance.

La vanne d'alimentation 110 est un distributeur 3 voies, 2 positions, dont une position de marche de la machine 1, et une position d'arrêt de la machine 1. La vanne 110 est rappelée élastiquement vers sa position d'arrêt. Elle est amenée dans sa position de marche par déplacement du bouton de mise en marche 114 et maintenue dans sa position de marche par un rétrocontrôle pneumatique de sécurité apte à détecter une baisse de pression et à permettre le déplacement de la vanne 110 dans sa position d'arrêt lors d'une chute de pression. La vanne 110 est en outre commandée pneumatiquement dans sa position d'arrêt par le passage de la vanne de détection de fin de course de recul 100 dans sa position de commande de fermeture.

Le dispositif de commande 102 comprend un circuit pneumatique 114 reliant la source d'air 104, la vanne d'alimentation 110, le moteur 6, le vérin de déplacement 54, le piston 88, la vanne de détection de fin de course de recul 100, la vanne de commande d'avance 106, la vanne de réduction du débit d'alimentation 108 et la vanne de commande de recul 109.

Le circuit pneumatique 114 comprend ainsi :
- un conduit d'alimentation 118 reliant un orifice de sortie 119 de la vanne d'alimentation 110 au moteur 6, la vanne de réduction de débit 108 obturant partiellement le conduit d'alimentation 118 dans sa position de réduction du débit d'alimentation du moteur 6;
- un conduit 120 piqué sur le conduit 118 entre les vannes 108 et 110 et relié à l'orifice d'entrée 93 de la chambre de détection de fin de course d'avance 92 délimitée par le piston 88, la vanne 110 dans sa position de marche alimentant la chambre 92 par le conduit 120 ;
- un conduit 123 piqué sur le conduit 118 entre les vannes 108 et 110 et relié à un orifice de rétrocontrôle de sécurité 124 de la vanne 110 pour maintenir la vanne 110 dans sa position de marche si la pression en amont de la vanne 110 est supérieure à une valeur seuil;
- un conduit 125 piqué sur le conduit 120 entre la vanne 110 et l'orifice d'entrée 93 de la chambre 92, et relié à un orifice d'entrée 126 de la vanne de commande d'avance 106, la vanne 110 dans sa position de marche alimentant la vanne 106 par le conduit 125 ;
- un conduit 127 reliant un orifice de sortie 128 de la vanne de commande d'avance 106 à la chambre d'avance 82 du vérin 54, la vanne 106 dans sa position de commande d'avance alimentant la chambre 82 par le conduit 127;
- un conduit 140 reliant l'orifice de sortie 94 de la chambre 92 à un orifice d'entrée 141 de la vanne de commande de recul 109, de façon à alimenter la vanne 109 lorsque le piston 88 est dans sa position de détection de fin de course d'avance ;
- un conduit 142 piqué sur le conduit 140 entre les orifices 94 et 141, et relié à un orifice d'actionnement 143 de la vanne 109, de façon à amener la vanne de commande de recul 109 dans sa position de commande de recul lorsque le piston 88 est dans sa position de détection de fin de course d'avance;
- un conduit 144 piqué sur le conduit 140 entre l'orifice de sortie 94 et le piquage du conduit 142, le conduit 144 étant relié à un orifice d'actionnement 145 de la vanne de commande d'avance 106, de façon à amener la vanne de commande d'avance 106 dans sa position inactive lorsque le piston 88 est dans sa position de détection de fin de course d'avance, et avant d'amener la vanne de commande de recul 109 dans sa position de recul ;
- un conduit 146 piqué sur le conduit 140 entre le piquage du conduit 142 et l'orifice d'entrée 141 de la vanne 109, le conduit 146 étant relié à un orifice d'actionnement 147 de la vanne de réduction du débit 108, de façon à amener la vanne 108 dans sa position de réduction du débit d'alimentation du moteur 6 lorsque le piston 88 est dans sa position de détection de fin de course d'avance, et avant d'alimenter la vanne de commande de recul 109 ;
- un conduit 150 piqué sur le conduit 140 et relié à un orifice d'entrée 151 de la vanne de détection de fin de course de recul 100, de façon à alimenter la vanne 100 lorsque le piston 88 est dans sa position de détection, le conduit 150 étant, dans l'exemple illustré, piqué entre l'orifice de sortie 94 et le piquage du conduit 144 de la vanne de commande d'avance 106 ;
- un conduit 154 reliant un orifice de sortie 155 de la vanne de commande de recul 109 à la chambre de recul 83 du vérin 54, de façon à alimenter la chambre de recul 83 lorsque la vanne de recul 109 est dans sa position de recul ; et
- un conduit 160 reliant un orifice de sortie 161 de la vanne de détection de fin de course de recul 100 à un orifice d'actionnement 162 de la vanne d'alimentation 110, de façon à amener la vanne d'alimentation 110 dans sa position d'arrêt lorsque la vanne de détection de fin de course de recul 100 est dans sa position de commande de fermeture de la vanne 110.

Les étapes de commande de la machine 1 vont maintenant être décrites en référence aux figures 4 à 7.

Le schéma de la figure 4 illustre la machine 1 à l'état d'arrêt. La vanne d'alimentation 110 est fermée et n'alimente pas le circuit pneumatique de commande 114. Le poussoir 52 est dans sa position intermédiaire.

Dans la configuration de la figure 5, la bouton 114 de mise en marche de la vanne d'alimentation 110 a été pressé.

La source d'air 104 est alors reliée par le conduit 118 au moteur 6, en passant par la vanne de réduction de débit 108 dans sa position ouverte, de telle sorte que le moteur 6 est alimenté.

Le piston 88 étant dans sa position d'obturation des orifices 93 et 94, l'air ne peut pas pénétrer dans la chambre 92 et ne peut pas sortir de la chambre 92, de telle sorte que les conduits en aval 140, 142, 144, 146, 150, 154 et 160 ne sont pas alimentés.

En revanche, la vanne de commande d'avance 106 est dans sa position de commande d'avance et relie le conduit 125 au conduit 127 de telle sorte que la chambre d'avance 82 du vérin 54 est alimentée par la source d'air 104. Il s'ensuit que le vérin de déplacement 54 est amené dans sa configuration d'avance.

L'embrayage 36 est alors dans sa configuration d'avance. Le moteur 6 entraîne le premier pignon 32 et le deuxième pignon 34, de telle sorte que la broche 4 avance en translation le long de son axe A.

La figure 6 illustre la broche 4 en fin de course d'avance. La butée 96 bloque la translation de la broche 4 vers l'avant. La rotation de la broche 4 soulève alors le deuxième pignon 34 et amène ainsi le piston 88 dans sa position de détection de fin de course d'avance.

Dans la position de détection du piston 88, les orifices d'entrée 93 et de sortie 94 de la chambre 92 sont libérés, la chambre 92 est alimentée et les conduits en aval 140, 142, 144, 146, 150 sont alimentés.

Le moteur 6 est toujours alimenté par la source d'air 104.

L'orifice d'actionnement 145 de la vanne de commande d'avance 106 est alimenté par le conduit 144 et la vanne 106 est amenée dans sa position inactive. Dans sa position inactive, la vanne 106 n'alimente plus la chambre d'avance 82 du vérin 80 et le poussoir 52 vient dans sa position intermédiaire.

Ensuite, l'orifice d'actionnement 143 de la vanne de commande de recul 109 est alimenté. La vanne 109 est alors amenée dans sa position de commande de recul.

Ensuite, l'orifice d'actionnement 147 de la vanne de réduction de débit 108 est alimenté. La vanne 108 est alors amenée dans sa position de réduction de débit.

Ensuite, l'orifice d'entrée 141 de la vanne de commande de recul 109 est alimenté. Dans la position de commande de recul de la vanne 109, le conduit 154 est alors alimenté et la vanne de commande de recul 109 alimente la chambre de recul 83 du vérin 54. Le poussoir 52 vient dans sa position de recul.

Lors du déplacement du piston 88 dans sa position de détection d'avance, l'air arrive dans le conduit 140.

Du fait de la longueur des conduits piqués 142, 144, 146 et de leur position respective de piquage sur le conduit 140, l'air arrive successivement à l'orifice d'actionnement 145, puis à l'orifice d'actionnement 143, puis à l'orifice d'actionnement 147, et enfin à l'orifice d'entrée 141.

Il s'ensuit que lors du déplacement du piston 88 dans sa position de détection de fin de course d'avance, la vanne de commande d'avance 106 est d'abord amenée dans sa position inactive.

La vanne de commande de recul 109 est ensuite ultérieurement amenée dans sa position de commande de recul.

La vanne de réduction de débit 108 est ensuite ultérieurement amenée dans sa position d'obturation partielle du conduit d'alimentation 118 du moteur 6, de telle sorte que la vitesse de rotation du moteur 6 est réduite.

La vanne de commande de recul 109 est ensuite ultérieurement alimentée.

Le vérin de déplacement 54 est ensuite ultérieurement amené dans sa configuration de recul, et le poussoir 52 dans sa position de recul. L'embrayage 36 est alors dans sa configuration de recul.

Le moteur 6 est toujours relié au premier pignon 32 et entraîne la broche 4 en rotation, mais n'est plus relié au deuxième pignon 34.

Le deuxième pignon 34 est immobilisé en rotation autour de son axe B, et entraîne ainsi en translation la broche 4 le long de son axe A dans un mouvement de recul rapide.

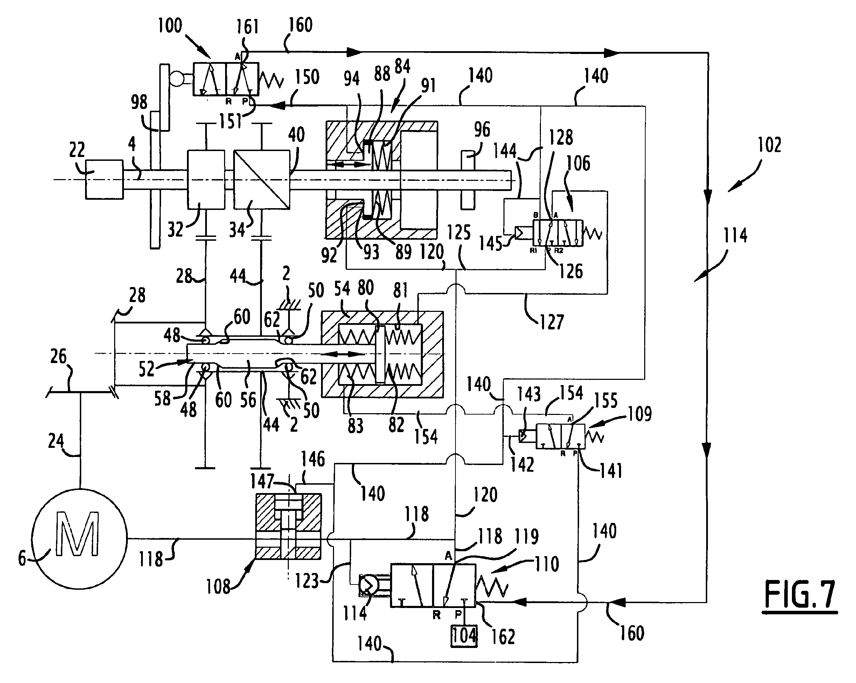

Lorsque la butée de fin de course de recul 98 arrive en contact avec la vanne de détection de fin de course de recul 100, la vanne 100 alimente le conduit d'actionnement 160 (figure 7) et amène la vanne d'alimentation 110 dans sa position d'arrêt. Le moteur 6 n'est plus alimenté et la machine 1 est arrêtée.

Le mécanisme d'embrayage 36 est robuste, et la machine 1 fiable.

En effet, les clavettes 48 et 50 sont déplaçables très rapidement par le poussoir 52 de telle sorte qu'elles ont une surface de prise importante avec les surfaces des évidements 68. En outre, les clavettes 48 et 50 sont rapportées sur le pignon 44 et de ce fait plus résistantes que, par exemple, des crabots dont les dents sont usinées.

L'immobilisation en translation du pignon rotatif d'embrayage 44 par rapport au carter 2 contribue également à la robustesse de l'embrayage 36. En effet, les vibrations du pignon rotatif 44 sont ainsi limitées. Cependant, une telle caractéristique peut être absente dans certaines variantes.

En outre, l'embrayage 36 est simple. Il a un coût de fabrication relativement faible.

L'embrayage 36 a également un encombrement réduit. L'agencement du poussoir 52 à l'intérieur du pignon rotatif 44 contribue à la réduction de cet encombrement, tout comme le nombre limité des pièces d'embrayage. En effet, le mécanisme d'entraînement 12 ne comprend que quatre pignons 28, 32, 34, 44 et l'embrayage 36 est réalisé au moyen d'un seul pignon 44.

La réduction de vitesse du moteur 6 préalablement au recul de la broche 4 contribue à la fiabilité de la machine 1.

En effet, le mécanisme d'entraînement 12 et l'embrayage 36 sont ainsi moins sollicités lors du passage de l'embrayage 36 de sa configuration d'avance à sa configuration de recul.

Le dispositif de commande pneumatique 102 et le moteur pneumatique 6 présentent l'avantage par rapport à un dispositif électrique d'un encombrement et d'un poids réduit. Néanmoins, en variante, le moteur 6, le dispositif de commande 102, le vérin de déplacement 54 du poussoir 52, les unités de détection de fin de course d'avance et de recul de la broche 4 peuvent être individuellement ou même tous des organes électriques.

Le dispositif de commande électrique comprend alors une unité de pilotage comprenant une mémoire dans laquelle sont stockés des programmes de pilotage du moteur d'entraînement adaptés pour assurer une réduction de vitesse du moteur 6 avant recul de la broche 4.

En variante, l'embrayage 36 ne possède qu'une seule première clavette 48 et/ou une seule deuxième clavette 50.

## Revendications

1. Machine d'usinage (1) comprenant :
- un carter (2);
- une broche porte-outil (4) s'étendant le long d'un axe (A) ;
- un moteur d'entraînement (6) de la broche porte-outil ; et
- un mécanisme d'entraînement (12) de la broche porte-outil (4) reliant mécaniquement le moteur d'entraînement (6) à la broche porte-outil (4), le mécanisme d'entraînement (12) comprenant :
- un premier organe d'entraînement (32) en rotation de la broche (4) autour de son axe (A) par rapport au carter (2) ; et
- un deuxième organe d'entraînement (34) en translation de la broche (4) le long de son axe (A) par rapport au carter (2), le deuxième organe d'entraînement (34) étant vissé sur un tronçon fileté (40) de la broche (4) de sorte que la broche (4) avance ou recule le long de son axe (A) en fonction de la vitesse relative de rotation entre le premier organe (32) et le deuxième organe (34);
le mécanisme d'entraînement (12) comprenant un embrayage (36) possédant une configuration de recul de la broche (4) dans laquelle le deuxième organe d'entraînement (34) et le moteur d'entraînement (6) sont débrayés, et une configuration d'avance de la broche (4) dans laquelle le deuxième organe d'entraînement (34) et le moteur d'entraînement (6) sont embrayés, l'embrayage (36) comprenant un organe rotatif d'embrayage (44) lié en rotation avec le deuxième organe d'entraînement (34), l'organe rotatif d'embrayage (44) étant mobile en rotation autour d'un axe (B) par rapport au carter (2) ;
**caractérisée en ce que** l'embrayage (36) comprend en outre :
- au moins une première clavette (48) mobile par rapport à l'organe rotatif d'embrayage (44) entre une position d'accouplement de l'organe rotatif (44) avec le moteur d'entraînement (6) et une position de libération de l'organe rotatif (44); et
- au moins une deuxième clavette (50) mobile par rapport à l'organe rotatif d'embrayage (44) entre une position d'accouplement de l'organe rotatif (44) avec le carter (2), et une position de libération de l'organe rotatif (44),
la première clavette (48) étant dans sa position d'accouplement et la deuxième clavette (50) étant dans sa position de libération lorsque l'embrayage (36) est dans sa configuration d'avance de la broche (4), la première clavette (48) étant dans sa position de libération et la deuxième clavette (50) étant dans sa position d'accouplement lorsque l'embrayage (36) est dans sa configuration de recul de la broche (4).

2. Machine d'usinage (1) selon la revendication 1, dans laquelle la première clavette (48) et/ou la deuxième clavette (50) est solidaire en rotation de l'organe rotatif d'embrayage (44).

3. Machine d'usinage (1) selon la revendication 1 ou 2, dans laquelle la première clavette (48) et/ou la deuxième clavette (50) est mobile radialement, par rapport à l'axe de rotation (B) de l'organe rotatif d'embrayage (44), entre sa position d'accouplement et sa position de libération.

4. Machine d'usinage (1) selon l'une quelconque des revendications précédentes, dans laquelle l'organe rotatif d'embrayage (44) est monté fixe en translation par rapport au carter (2) le long de son axe (B).

5. Machine d'usinage (1) selon l'une quelconque des revendications précédentes, dans laquelle le deuxième organe d'entraînement (34) est un pignon, l'organe rotatif d'embrayage (44) étant un pignon engrené avec le deuxième organe d'entraînement (34), le mécanisme d'entraînement (12) comprenant un pignon d'entrée (28) engrené avec un pignon de sortie (26) du moteur d'entraînement (6), l'organe rotatif d'embrayage (44) étant accouplé avec le pignon d'entrée (28) lorsque l'embrayage (36) est dans sa configuration d'avance.

6. Machine d'usinage (1) selon la revendication 5, dans laquelle le premier organe d'entraînement (32) est un pignon engrené avec le pignon d'entrée (28).

7. Machine d'usinage (1) selon l'une quelconque des revendications précédentes, dans laquelle l'embrayage (36) comprend un poussoir (52) mobile entre une position d'avance dans laquelle le poussoir (52) maintient la première clavette (48) dans sa position d'accouplement et libère la deuxième clavette (50), et une position de recul dans laquelle le poussoir (52) maintient la deuxième clavette (50) dans sa position d'accouplement et libère la première clavette (48).

8. Machine d'usinage (1) selon l'une quelconque des revendications précédentes, dans laquelle la première clavette (48) et/ou la deuxième clavette (50) est une bille reçue dans un alésage (66) de l'organe rotatif d'embrayage (44).

9. Machine d'usinage (1) selon l'une quelconque des revendications précédentes, comprenant un dispositif (102) de commande du moteur d'entraînement (6) et de l'embrayage (36).

10. Machine d'usinage selon la revendication 9, dans laquelle le dispositif de commande (102) comprend une unité de détection de fin de course d'avance de la broche (4), le dispositif de commande (102) amenant l'embrayage (36) dans sa configuration de recul lors de la détection de fin de course d'avance de la broche (4).

11. Machine d'usinage (1) selon la revendication 10, dans laquelle le dispositif de commande (102) commande une réduction de la vitesse de rotation du moteur d'entraînement (6), lors de la détection de fin de course d'avance de la broche (4).

12. Machine d'usinage (1) selon l'une quelconque des revendications 9 à 11, dans laquelle le moteur d'entraînement (6) est pneumatique, le dispositif de commande (102) étant pneumatique et comprenant une vanne pneumatique (108) de réduction de débit d'alimentation du moteur d'entraînement (6).

13. Machine d'usinage (1) selon la revendication 12, dans laquelle le dispositif de commande (102) comprend un circuit pneumatique de commande (114) de la vanne de réduction de débit (108) et du vérin de déplacement (54), le circuit (114) alimentant la vanne de réduction de débit (108) en amont du vérin de déplacement (54) de telle sorte que le dispositif de commande (102) assure une réduction du débit d'alimentation du moteur d'entraînement (6) avant de commander le déplacement du poussoir (52) jusqu'à sa position de recul.

14. Procédé d'usinage, **caractérisé en ce qu'**il est mis en oeuvre au moyen d'une machine d'usinage (1) suivant l'une quelconque des revendications précédentes.

15. Procédé selon la revendication 14, comprenant une étape d'avance de la broche (4) dans laquelle la vitesse de rotation de la broche (4) est ≥ 6000 tr/min, de préférence ≥ 8000 tr/min, de préférence encore ≥ 10 000 tr/min, de préférence encore ≥ 12 000 tr/min, de préférence encore ≥ 14 000 tr/min, de préférence encore ≥ 15 000 tr/min.

## Claims

1. Machining tool (1) comprising:
- a housing (2);
- a tool holder spindle (4) which extends along an axis (A);
- a driving motor (6) for the tool holder spindle; and
- a driving mechanism (12) for the tool holder spindle (4) connecting the driving motor (6) mechanically to the tool holder spindle (4), the driving mechanism (12) comprising:
- a first member (32) for driving the spindle (4) rotationally about the axis (A) thereof relative to the the housing (2); and
- a second member (34) for driving the spindle (4) translationally along the axis (A) thereof relative to the housing (2), the second driving member (34) being screwed on a threaded section (40) of the spindle (4) so that the spindle (4) advances or withdraws along the axis (A) thereof as a function of the relative speed of rotation between the first member (32) and the second member (34);
the driving mechanism (12) comprising an engagement means (36) having a configuration for withdrawing the spindle (4) in which the second driving member (34) and the driving motor (6) are disengaged, and a configuration for advancing the spindle (4) in which the second driving member (34) and the driving motor (6) are engaged, the engagement means (36) comprising a rotational member for engagement (44) connected in rotation to the second driving member (34), the rotational member for engagement (44) being moveable rotationally about an axis (B) relative to the housing (2);
**characterised in that** the engagement means (36) comprises furthermore:
- at least one first dog (48) which is moveable relative to the rotational member for engagement (44) between a position coupling the rotational member (44) to the driving motor (6) and a position freeing the rotational member (44); and
- at least one second dog (50) which is moveable relative to the rotational member for engagement (44) between a position coupling the rotational member (44) to the housing (2) and a position freeing the rotational member (44),
- the first dog (48) being in its coupled position and the second dog (50) being in its free position when the engagement means (36) is in its configuration for advancing the spindle (4), the first dog (48) being in its free position and the second dog (50) being in its coupled position when the engagement means (36) is in its configuration for withdrawing the spindle (4).

2. Machining tool (1) according to claim 1, in which the first dog (48) and/or the second dog (50) is integral in rotation with the rotational member for engagement (44).

3. Machining tool (1) according to claim 1 or 2, in which the first dog (48) and/or the second dog (50) is radially moveable relative to the axis of rotation (B) of the rotational member for engagement (44) between its coupled position and its free position.

4. Machining tool (1) according to any of the preceding claims, in which the rotational member for engagement (44) is mounted fixed in translation relative to the housing (2) along the axis (B) thereof.

5. Machining tool (1) according to any of the preceding claims, in which the second driving member (34) is a pinion, the rotational member for engagement (44) being a pinion meshing with the second driving member (34), the driving mechanism (12) comprising an input pinion (28) meshing with an output pinion (26) of the driving motor (6), the rotational member for engagement (44) being coupled to the input pinion (28) when the engagement means (36) is in its advancing position.

6. Machining tool (1) according to claim 5, in which the first driving member (32) is a pinion meshing with the input pinion (28).

7. Machining tool (1) according to any of the preceding claims, in which the engagement means (36) comprises a tappet (52) which is moveable between an advancing position in which the tappet (52) retains the first dog (48) in its coupled position and frees the second dog (50) and a withdrawing position in which the tappet (52) retains the second dog (50) in its coupled position and frees the first dog (48).

8. Machining tool (1) according to any of the preceding claims, in which the first dog (48) and/or the second dog (50) is a ball received in a boring (66) of the rotational member for engagement (44).

9. Machining tool (1) according to any of the preceding claims, comprising a device (102) for controlling the driving motor (6) and the engagement means (36).

10. Machining tool according to claim 9, in which the control device (102) comprises a unit for detecting the end of the advancing course of the spindle (4), the control device (102) guiding the engagement means (36) into its withdrawing configuration upon detecting the end of the advancing course of the spindle (4).

11. Machining tool (1) according to claim 10, in which the control device (102) causes a reduction in the speed of rotation of the driving motor (6) upon detecting the end of the advancing course of the spindle (4).

12. Machining tool (1) according to any of the claims 9 to 11, in which the driving motor (6) is pneumatic, the control device (102) being pneumatic and comprising a pneumatic valve (108) for reducing the supply quantity to the driving motor (6).

13. Machining tool (1) according to claim 12, in which the control device (102) comprises a pneumatic control circuit (114) for the valve for reducing the quantity (108) and for the displacement thrustor (54), the circuit (114) supplying the valve (108) for reducing the quantity upstream of the displacement thrustor (54) such that the control device (102) ensures a reduction in the supply quantity to the driving motor (6) before causing the displacement of the tappet (52) to its withdrawing position.

14. Method for machining, **characterised in that** it is implemented by means of a machining tool (1) according to any of the preceding claims.

15. Method according to claim 14, comprising a step of advancing the spindle (4) in which the speed of rotation of the spindle (4) is ≥ 6,000 rpm, preferably ≥ 8,000, more preferably ≥ 10,000 rpm, more preferably ≥ 12,000 rpm, more preferably ≥ 14,000 rpm, more preferably ≥ 15,000 rpm.

## Patentansprüche

1. Bearbeitungsmaschine (1), die umfasst:
- ein Gehäuse (2);
- eine Werkzeugträgerspindel (4), die sich längs einer Achse (A) erstreckt;
- einen Motor (6) für den Antrieb der Werkzeugträgerspindel; und
- einen Mechanismus (12) für den Antrieb der Werkzeugträgerspindel (4), der den Antriebsmotor (6) mit der Werkzeugträgerspindel (4) mechanisch verbindet, wobei der Antriebsmechanismus (12) umfasst:
- ein erstes Organ (32) für den rotatorischen Antrieb der Spindel (4) um deren Achse (A) in Bezug auf das Gehäuse (2); und
- ein zweites Organ (34) für den translatorischen Antrieb der Spindel (4) längs ihrer Achse (A) in Bezug auf das Gehäuse (2), wobei das zweite Antriebsorgan (34) auf ein Gewindeteilstück (40) der Spindel (4) in der Weise geschraubt ist, dass die Spindel (4) längs ihrer Achse (A) als Funktion der relativen Drehgeschwindigkeit zwischen dem ersten Organ (32) und dem zweiten Organ (34) vorwärts oder rückwärts läuft;
wobei der Antriebsmechanismus (12) eine Kupplung (36) umfasst, die eine Rücklaufkonfiguration für die Spindel (4), in der das zweite Antriebsorgan (34) und der Antriebsmotor (6) ausgerückt sind, und eine Vorlaufkonfiguration für die Spindel (4), in der das zweite Antriebsorgan (34) und der Antriebsmotor (6) eingerückt sind, besitzt,
- ein rotierendes Kupplungsorgan (44), das mit dem zweiten Antriebsorgan (34) drehfest verbunden ist, wobei das rotierende Kupplungsorgan (44) rotatorisch um eine Achse (B) in Bezug auf das Gehäuse (2) beweglich ist;
**dadurch gekennzeichnet, dass** die Kupplung (36) umfasst:
- wenigstens einen ersten Keil (48), der in Bezug auf das rotierende Kupplungsorgan (44) zwischen einer Position für die Ankopplung des rotierenden Organs (44) an den Antriebsmotor (6) und einer Position für die Freigabe des rotierenden Organs (44) beweglich ist; und
- wenigstens einen zweiten Keil (50), der in Bezug auf das rotierende Kupplungsorgan (44) zwischen einer Position für die Ankopplung des rotierenden Organs (44) an das Gehäuse und einer Position für die Freigabe des rotierenden Organs (44) beweglich ist,
wobei der erste Keil (48) in seiner Ankopplungsposition ist und der zweite Keil (50) in seiner Freigabeposition ist, wenn die Kupplung (36) in ihrer Vorlaufkonfiguration für die Spindel (4) ist, während der erste Keil (48) in seiner Freigabeposition ist und der zweite Keil (50) in seiner Ankopplungsposition ist, wenn die Kupplung (36) in ihrer Rücklaufkonfiguration für die Spindel (4) ist.

2. Bearbeitungsmaschine (1) nach Anspruch 1, wobei der erste Keil (48) und/oder der zweite Keil (50) mit dem rotierenden Kupplungsorgan (44) drehfest verbunden sind.

3. Bearbeitungsmaschine (1) nach Anspruch 1 oder 2, wobei der erste Keil (48) und/oder der zweite Keil (50) in Bezug auf die Drehachse (B) des rotierenden Kupplungsorgans (44) zwischen ihrer Ankopplungsposition und ihrer Freigabeposition radial beweglich sind.

4. Bearbeitungsmaschine (1) nach einem der vorhergehenden Ansprüche, wobei das rotierende Kupplungsorgan (44) in Bezug auf das Gehäuse (2) längs seiner Achse (B) translationsfest angebracht ist.

5. Bearbeitungsmaschine (1) nach einem der vorhergehenden Ansprüche, wobei das zweite Antriebsorgan (34) ein Ritzel ist, das rotierende Kupplungsorgan (44) ein mit dem zweiten Antriebsorgan (34) in Eingriff befindliches Ritzel ist, der Antriebsmechanismus (12) ein Eingangsritzel (28) aufweist, das mit einem Ausgangsritzel (26) des Antriebsmotors (6) in Eingriff ist, und das rotierende Kupplungsorgan (44) an das Eingangsritzel (28) angekoppelt ist, wenn die Kupplung (36) in ihrer Vorlaufkonfiguration ist.

6. Bearbeitungsmaschine (1) nach Anspruch 5, wobei das erste Antriebsorgan (32) ein Ritzel ist, das mit dem Eingangsritzel (28) in Eingriff ist.

7. Bearbeitungsmaschine (1) nach einem der vorhergehenden Ansprüche, wobei die Kupplung (36) einen Stößel (52) umfasst, der zwischen einer Vorlaufposition, in der der Stößel (52) den ersten Keil (48) in seiner Ankopplungsposition hält und den zweiten Keil (50) freigibt, und einer Rücklaufposition, in der der Stößel (52) den zweiten Keil (50) in seiner Ankopplungsposition hält und den ersten Keil (48) freigibt, beweglich ist.

8. Bearbeitungsmaschine (1) nach einem der vorhergehenden Ansprüche, wobei der erste Keil (48) und/oder der zweite Keil (50) jeweils eine Kugel sind, die in einer Bohrung (66) des rotierenden Kupplungsorgans (44) aufgenommen ist.

9. Bearbeitungsmaschine (1) nach einem der vorhergehenden Ansprüche, die eine Vorrichtung (102) zum Steuern des Antriebsmotors (6) und der Kupplung (36) umfasst.

10. Bearbeitungsmaschine nach Anspruch 9, wobei die Steuervorrichtung (102) eine Bahnende-Detektionseinheit für den Vorlauf der Spindel (4) umfasst, wobei die Steuervorrichtung (102) die Kupplung (36) in ihre Rücklaufkonfiguration bringt, wenn das Vorlaufbahnende der Spindel (4) detektiert wird.

11. Bearbeitungsmaschine (1) nach Anspruch 10, wobei die Steuervorrichtung (102) eine Verringerung der Drehgeschwindigkeit des Antriebsmotors (6) befiehlt, wenn das Vorlaufbahnende der Spindel (4) detektiert wird.

12. Bearbeitungsmaschine (1) nach einem der Ansprüche 9 bis 11, wobei der Antriebsmotor (6) ein Druckluftmotor ist und die Steuervorrichtung (102) mit Druckluft arbeitet und einen Druckluftschieber (108) für die Reduzierung des Versorgungsdurchsatzes des Antriebsmotors (6) enthält.

13. Bearbeitungsmaschine (1) nach Anspruch 12, wobei die Steuervorrichtung (102) einen Druckluftkreis (114) für die Steuerung des Durchsatzreduzierungsschiebers (108) und des Verlagerungskolbens (54) umfasst, wobei der Kreis (114) den Durchsatzreduzierungsschieber (108) stromaufseitig des Verlagerungskolbens (54) versorgt, derart, dass die Steuervorrichtung (102) eine Reduzierung des Versorgungsdurchsatzes des Antriebsmotors (6) sicherstellt, bevor die Verlagerung des Stößels (52) in seine Rücklaufposition befohlen wird.

14. Bearbeitungsverfahren, **dadurch gekennzeichnet, dass** es mittels einer Bearbeitungsmaschine (1) nach einem der vorhergehenden Ansprüche ausgeführt wird.

15. Verfahren nach Anspruch 14, das einen Schritt für den Vorlauf der Spindel (4) umfasst, in der die Drehgeschwindigkeit der Spindel (4) ≥ 6000 min⁻¹, vorzugsweise ≥ 8000 min⁻¹, stärker bevorzugt ≥ 10000 min⁻¹, stärker bevorzugt ≥ 12000 min-¹, stärker bevorzugt ≥ 14000 min-¹, stärker bevorzugt ≥ 15000 min⁻¹ ist.
